# EUROPÄISCHE PATENTSCHRIFT

(11) **EP 3 433 121 B1**
(45) Veröffentlichungstag und Bekanntmachung des Hinweises auf die Patenterteilung: **12.05.2021**
(21) Anmeldenummer: 17755417.7
(22) Anmeldetag: 08.08.2017
(51) Int. Cl.: B60K 15/067, B60K 15/063

(54) **VORRICHTUNG ZUR KRAFT- UND/ODER FORMSCHLÜSSIGEN BEFESTIGUNG EINES BAUTEILS AN EINEM FAHRZEUGRAHMEN**
DEVICE FOR FRICTIONALLY AND/OR INTERLOCKINGLY FASTENING A COMPONENT TO A VEHICLE FRAME
DISPOSITIF DE FIXATION À FORCE ET/OU PAR COOPÉRATION DE FORMES D'UN ÉLÉMENT SUR UN CHÂSSIS DE VÉHICULE

(30) Priorität: 17.08.2016 DE 102016010010
(43) Veröffentlichungstag der Anmeldung: 30.01.2019
(73) Patentinhaber: Liebherr-Mining Equipment Colmar SAS, 68025 Colmar cedex (FR)
(72) Erfinder: HUNDERTPFUND, Frank, 77963 Schwanau (DE); KUGELSTADT, Kai, 77933 Lahr (DE)
(74) Vertreter: Laufhütte, Dieter
(86) Internationale Anmeldenummer: PCT/EP2017/000962
(87) Internationale Veröffentlichungsnummer: WO 2018/033238

(56) Entgegenhaltungen:
- EP-A2- 2 130 747
- CN-U- 204 210 305
- DE-A1-102012 217 248
- DE-T2- 60 116 910
- US-A1- 2015 308 077
- US-B1- 7 677 514

## Beschreibung

Die Erfindung betrifft eine Vorrichtung zur kraft- und/oder formschlüssigen Befestigung eines Tanks an einem Fahrzeugrahmen, mit wenigstens einer an einem oberen Bereich des Bauteils koppelbaren oberen Befestigungsplatte und wenigstens einer darunter mit dem Bauteil koppelbaren unteren Befestigungsplatte, wobei die Befestigungsplatten dazu ausgebildet sind, die Gewichtskraft des Bauteils großteils oder ausschließlich in ein Obergurtblech und/oder ein Untergurtblech eines Längsträgers des Fahrzeugrahmens zu leiten.

Bei gattungsgemäßen Vorrichtungen zur Montage von Fahrzeugtanks insbesondere von Bergbaufahrzeugen, Baumaschinen und ähnlichem Gerät, kommt es immer wieder zu Ermüdungsrissen in Verbindungsschweißnähten zwischen herkömmlichen Tankbefestigungspunkten und dem Fahrzeugrahmen, an dem der jeweilige Tank befestigt ist. Dabei werden bekannterweise Anschweißplatten oder Konsolen an den relativ schwachen Stegen bzw. Seitenblechen 25 der Fahrzeugrahmen angebracht bzw. angeschweißt, was unter dynamischen Belastungen zu den genannten Rissen führen kann. Dies hängt damit zusammen, dass das Stegblech über die aus dem Stand der Technik bekannten Anschweißplatten zusätzliche Momente und Querbelastungen aufnehmen muss. Aus dem Stand der Technik sind auch Bohrungen zur Befestigung des Tanks an den Seitenblechen und/oder im Obergurt vorgesehen, was aber ebenfalls zu einer Schwächung der Stegbleche bzw. der Rahmenstruktur führt. Auch Bohrungen zur Befestigung an den Seitenblechen oder im Obergurt führen zu Schwächungen.

Vor diesem Hintergrund besteht die Notwendigkeit eine verbesserte Verbindung zwischen einem Fahrzeugbauteil, beispielsweise Fahrzeugtank, und einem Fahrzeug bereitzustellen. Aufgabe der Erfindung ist es daher, eine gattungsgemäße Vorrichtung weiterzuentwickeln, wobei keine Schwachstellen in Form von besonders anfälligen Verbindungsschweißnähten auftreten und die Verbindung von Bauteil- und Fahrzeugrahmen dauerhafter und damit verbessert wird

Die Druckschriften CN 204 210 305 U und DE 601 16 910 T2 offenbaren gattungsgemäße Vorrichtungen.

Diese Aufgabe wird erfindungsgemäß durch eine Vorrichtung mit den Merkmalen des Anspruchs 1 gelöst. Vorteilhafte Ausgestaltungen sind Gegenstand der Unteransprüche.

Demnach ist eine Vorrichtung zur kraft- und/oder formschlüssigen Befestigung eines Tanks an einem Fahrzeugrahmen vorgesehen, mit wenigstens einer an einem oberen Bereich des Tanks koppelbaren oberen Befestigungsplatte und wenigstens einer darunter mit dem Tank koppelbaren unteren Befestigungsplatten, wobei die Befestigungsplatten dazu ausgebildet sind, die Gewichtskraft des Tanks großteils oder ausschließlich ein Obergurtblech und/oder ein Untergurtblech eines Längsträgers des Fahrzeugrahmens zu leiten. Die Halterungen, Befestigungsstellen bzw. Befestigungsplatten sind außerhalb der hochbeanspruchten Bereiche des Fahrzeugrahmens anordenbar und können ohne Schwächung der Struktur des Fahrzeugrahmens mit diesem gekoppelt werden. Insbesondere ist es möglich, auf Schweißnähte für die Befestigung der Komponenten und damit auf die durch die Schweißnähte bedingten Strukturschwächungen gänzlich zu verzichten. Bei den Befestigungsplatten muss es sich nicht um planare Komponenten handeln, sondern diese können auch eine komplexe Geometrie aufweisen.

Erfindungsgemäß wird vorgeschlagen, dass die obere Befestigungsplatte und/oder die untere Befestigungsplatte wenigstens teilweise L-förmig ausgebildet sind, wobei die obere Befestigungsplatte insbesondere über einen oberen horizontalen Auflagebereich mit dem Obergurtblech verbindbar, insbesondere verschraubbar ist und über einen vertikalen Bereich mit dem Tank koppelbar ist und/oder wobei die untere Befestigungsplatte insbesondere über einen unteren horizontalen Auflagebereich mit dem Untergurtblech verbindbar, insbesondere verschraubbar und über einen vertikalen Bereich mit dem Tank koppelbar ist. Die L-förmige Ausbildung erlaubt dabei eine besonders einfache und stabile Form der Befestigungsplatten, welche deren Herstellung entsprechend kostengünstig macht. In einer bevorzugten Ausführung ist ferner denkbar, dass die obere Befestigungsplatte und/oder die untere Befestigungsplatte je zwei zueinander insbesondere parallel angeordnete Flachmetallabschnitte und je zwei zueinander insbesondere senkrecht angeordnete Flachmetallabschnitte umfassen. Die Angabe zur Ausrichtung der Abschnitte ist dabei nicht einschränkend zu sehen und es könne auch abweichende Ausrichtungen als die parallele und die senkrechte auftreten. Die Befestigungsplatten können hierbei aus einem Flachmetallstück insbesondere einstückig gefertigt sein, welches entsprechend ausgebrannt, gebogen und/oder verschweißt sein kann. Durch diese Ausbildung der Befestigungsplatten kann eine stabile Anbindung des Tanks bei möglichst einfacher Geometrie der verwendeten Komponenten sichergestellt werden. Die senkrecht zueinander angeordneten Flachmetallabschnitte der Befestigungsplatten können eine waagrechte und eine senkrechte Komponenten umfassen und ermöglichen es, über die waagrecht ausgebildete Komponente eine stabile Kopplung mit einem Gurtblech des Längsträgers bereitzustellen, während die senkrechte Komponente der Befestigungsplatten eine Kopplung an dem Tank ermöglicht
Erfindungsgemäß wird weiter vorgeschlagen, an dem vertikalen Bereich der oberen Befestigungsplatte zwei Durchführungen zur Aufnahme eines Bolzens vorgesehen sind, wobei der Tank mittels des Bolzens mit der Vorrichtung koppelbar ist. Da auch mehr als eine obere Befestigungsplatte Verwendung finden kann, können auch entsprechend insgesamt mehr als ein einzelner Bolzen vorgesehen sein. Die Verwendung eines Bolzens zur Kopplung des Tanks vereinfacht die Montage des Tanks an dem Fahrzeugrahmen. Auch wird ein ggf. erforderliches Auswechseln des Tanks durch das verhältnismäßig einfache Lösen des Bolzens erleichtert. Ferner kann mittels des Bolzens eine zumindest teilweise schwenkbare Lagerung des Tanks an dem restlichen Fahrzeug erfolgen, wodurch der Tank begrenzt verschwenkbar ist, wenn das Fahrzeug über den Tank auf den Untergrund aufsetzt. Dies kann beispielsweise bei Fahrt über sehr unebenen Untergrund passieren. Durch schwenkbare Anordnung des Tanks kann das Risiko von Beschädigungen des Tanks verringert werden. Denkbar ist auch eine Verbindung der oberen und/oder unteren Befestigungsplatte und des Tanks mittels von Schrauben oder sonstiger Verbindungsmitteln.

In einer weiteren bevorzugten Ausführung ist denkbar, dass zwischen der unteren Befestigungsplatte und dem Tank mindestens ein Lager, insbesondere ein Gummilager vorgesehen ist. Das Lager kann hierbei eine Relativbewegung des Tanks zum Fahrzeugrahmen dämpfen und hierdurch die erfindungsgemäß bereitgestellte Verbindung widerstandskräftiger gegen insbesondere Schwingungsbelastungen machen.

In einer weiteren bevorzugten Ausgestaltung ist denkbar, dass wenigstens zwei zueinander baugleiche obere Befestigungsplatten und/oder dass wenigstens zwei zueinander baugliche unteren Befestigungsplatten vorgesehen sind. Hierdurch wird eine besonders kostengünstige Fertigung der Vorrichtung erreicht, da nicht unterschiedliche Geometrien zwangsläufig zur Ausführung der Erfindung notwendig sind. Auch können die einzelnen Befestigungsplatten verhältnismäßig klein gehalten werden, so dass der Materialaufwand entsprechend gering ist.

In einer weiteren bevorzugten Ausführung ist denkbar, dass die obere und/oder die untere Befestigungsplatte mit baugleichen Klemmblöcken mit dem Fahrzeugrahmen koppelbar sind. Die Klemmblöcke dienen hierbei hierzu, die Gurte des Fahrzeugrahmens im Zusammenwirken mit den Befestigungsplatten und weiteren Verbindungsmitteln wie beispielsweise Schrauben festzustellen. Die Ausführung der Klemmblöcke als baugleiche Komponenten vereinfacht die Ausführung der erfindungsgemäßen Vorrichtung hierbei weiter.

Es ist denkbar, dass je zwei obere und untere Befestigungsplatten in dem montierten Zustand des Tanks jeweils gleich weit voneinander beabstandet sind. Insbesondere können hierbei je eine obere und eine untere Befestigungsplatte in dem montierten Zustand des Tanks übereinander an dem Fahrzeugrahmen angeordnet sein. Bei seitlicher Betrachtung der Befestigungsplatten kann sich somit eine zueinander rechtwinklige Anordnung der Befestigungsplatten ergeben. Hierdurch können insbesondere eckig ausgebildete Tanks an ihren unteren bzw. oberen Eckbereichen erfindungsgemäß gehalten bzw. am Fahrzeugrahmen fixiert werden. Genauso ist dabei aber auch eine Fixierung der Tanks an einer oberen Kante und einem zwischen der oberen Kante und einer unteren Kante des Tanks gelegenen Bereich möglich.

Die Erfindung betrifft ferner ein Fahrzeug, insbesondere ein Bergbaufahrzeug bzw. eine Baumaschinen, wobei der Tank des Fahrzeugs mittels einer Vorrichtung nach Ansprüchen 1 bis 9 mit dem Fahrzeugrahmen des Fahrzeugs gekoppelt ist.

Weitere Einzelheiten und Vorteile der Erfindung sind anhand der in den Figuren beispielhaft gezeigten Ausführungen erläutert. Dabei zeigen:
- Figur 1:: perspektivische Ansicht einer erfindungsgemäßen Vorrichtung mit einem an einem Fahrzeugrahmen befestigtem Tank;
- Figur 2:: Draufsicht einer erfindungsgemäßen Vorrichtung mit einem an einem Fahrzeugrahmen befestigtem Tank;
- Figur 3:: perspektivische Ansicht einer oberen Befestigungsplatte der erfindungsgemäßen Vorrichtung;
- Figur 4:: Schnittansicht einer oberen Befestigungsplatte der erfindungsgemäßen Vorrichtung in montiertem Zustand;
- Figur 5:: Detailansicht eines Teils einer oberen Befestigungsplatte einer erfindungsgemäßen Vorrichtung im am Tank montierten Zustand;
- Figur 6:: perspektivische Ansicht einer unteren Befestigungsplatte;
- Figur 7:: perspektivische Ansicht eines Klemmblocks; und
- Figur 8:: perspektivische Ansicht einer Muldenführung.

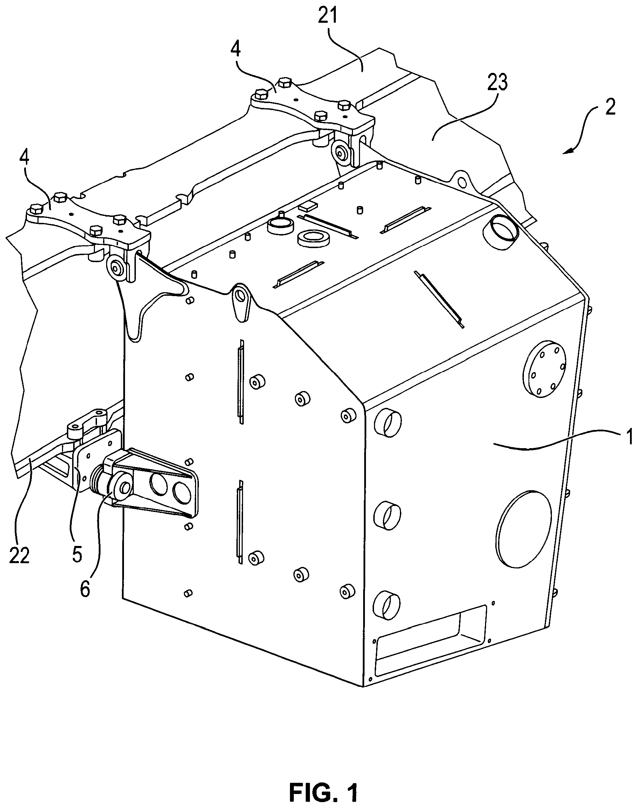

Figur 1 zeigt eine perspektivische Ansicht einer erfindungsgemäßen Vorrichtung zur kraft- und/der formschlüssigen Befestigung eines Tanks 1 an einem Fahrzeugrahmen 2, wobei an dem oberen Bereich des Tanks 1 zwei obere Befestigungsplatten 4 und darunter zwei untere Befestigungsplatten 5 eine Kopplung zwischen dem Fahrzeugrahmen 2 und dem Tank 1 herstellen können. Denkbar ist auch eine Ausführung, bei der im oberen Bereich des Tanks 1 eine einzelne insbesondere einstückige obere Befestigungsplatte 4 und/oder im unteren Bereiche des Tanks 1 eine einzelne insbesondere einstückige untere Befestigungsplatte 5 vorgesehen ist. Dabei kann beispielsweise der Tank 1 in seinem unteren Bereich unter Verwendung nur einer einzelnen geklemmten Platte an einem ersten unteren Befestigungspunkt an den Fahrzeugrahmen 2 gekoppelt werden, während sich ein weiterer unterer Befestigungspunkt des Tanks 1 auf einem Rahmenteil, insbesondere auf einem Rahmengussteil, und ohne zweite untere Befestigungsplatte 5 abstützt. Die Gewichtskraft des Tanks 1 wird dabei über die Befestigungsplatten 4, 5 großteils oder ausschließlich in die Gurtbleche des Längsträgers 23 des Fahrzeugrahmens 2 eingeleitet. Die obere Befestigungsplatte 4 kann dabei einen Großteil oder die gesamte Gewichtskraft des Tanks 1 in das Obergurtblech 21 des Längsträgers 23 einleiten.

Der Tank 1 kann wie in Figur 1 angedeutet schwenkbar relativ zu den oberen Befestigungsplatten 4 mit diesen gekoppelt sein, während die Schwenkbewegung des Tanks 1 um die oberen Befestigungsplatten 4 durch ein Wechselwirken zwischen den unteren Befestigungsplatten 5 und entsprechenden Anschlägen am Tank 1 beschränkt bzw. gedämpft sein kann. Hierbei können Lager 6 zwischen den unteren Befestigungsplatten 5 und dem Tank 1 vorgesehen sein. Der Tank 1 kann so wenigstens teilweise drehbar bzw. gedämpft am Fahrzeugrahmen 2 gelagert sein, wodurch ein beschränkter Schutz der Vorrichtung bei ungewollten Krafteinleitungen in die Befestigungsplatten 4, 5 aufgrund von beispielsweise Bodenkontakt des Tanks 1 oder Vibrationen gegeben ist.

Die Befestigungsplatten 4, 5 können jeweils mit dem Ober- und Untergurtblech 21, 22 verschraubt, verbolzt und/oder auf sonstige Weise insbesondere lösbar miteinander verbunden sein. Hierdurch entfällt das Einbringen von Schwachstellen, welcher sich bei geschweißten Verbindungen zwischen Tank 1 und Längsträger 23 ergeben können.

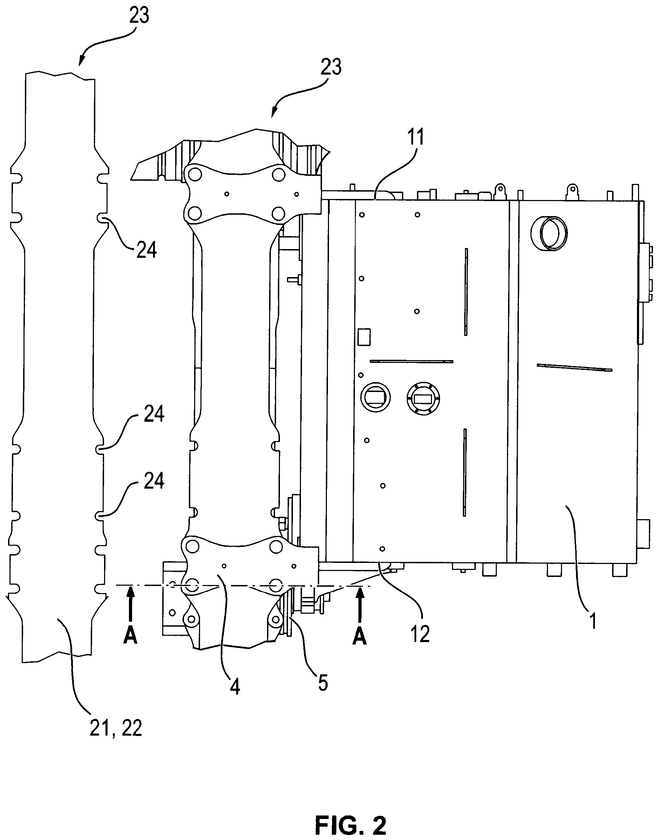

Figur 2 zeigt eine entsprechende Draufsicht des Tanks 1, welcher über die erfindungsgemäße Vorrichtung mit dem Längsträger 23 des Fahrzeugrahmens 2 gekoppelt ist. Die unteren Befestigungsplatten 5 können dabei weiter außen am Tank 1 angeordnet sein, als die oberen Befestigungsplatten 4. Hierdurch kann der Tank 1 besonders einfach und stabil in Längsrichtung des Fahrzeugs mittels der unteren Befestigungsplatten 5 festgestellt werden.

An den im linken Bereich der Figur 2 vergrößert dargestellten Gurtblechen 21, 22 des Längsträgers 23 können Ausnehmungen 24 vorgesehen sein, welche zur Aufnahme von entsprechenden Schrauben ausgebildet sind, mittels welcher die Befestigungsplatten 4, 5 an den Gurtblechen 21, 22 festgeschraubt werden können. An den Gurtblechen 21, 22 kann eine Vielzahl von Ausnehmungen 24 vorgesehen sein, welche die Montage von unterschiedlich dimensionierten Tanks 1 an gleichen Gurtblechen 21, 22 ermöglichen. Die Ausnehmungen 24 können beispielsweise als Bohrungen ausgebildet sein, und insbesondere in wenig belasteten Abschnitten des Längsträgers 23 bzw. der Gurtbleche 21, 22 vorgesehen sein. Es ist auch denkbar, Verbreiterungen an den Gurtblechen 21, 22 vorzusehen, in deren Bereichen die Ausnehmungen 24 angeordnet sein können. Die Verbreiterungen können hierbei an Stellen der Gurtbleche 21, 22 angeordnet sein, an denen keine großen Belastungen von den Gurtblechen 21, 22 aufgenommen werden.

Obere und untere Befestigungsplatten 4, 5 können dabei dazu ausgebildet sein, wenigstens teilweise an einer Vorderwand 11 und Rückwand 12 des Tanks 1 anbindbar bzw. koppelbar zu sein. Diese Bereiche des Tanks 1 können während der Montage des entsprechenden Fahrzeugs einfach für Montagepersonal zugänglich gehalten werden, wodurch die Montage des Tanks 1 selbst vereinfacht ist.

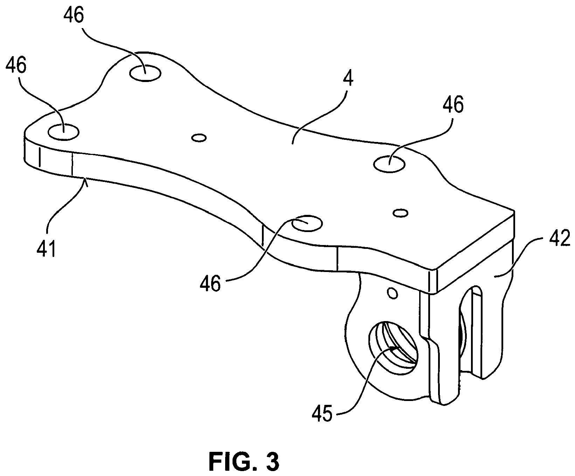

Figur 3 zeigt eine perspektivische Ansicht einer oberen Befestigungsplatte 4, die bei Betrachtung in Längsrichtung des entsprechenden Fahrzeugs wenigstens teilweise L-förmig ausgebildet ist. Die hier gezeigte obere Befestigungsplatte 4 umfasst dabei einen horizontalen Auflagebereich 41, welcher in der Figur 3 der nicht sichtbaren Unterseite der dargestellten Platte entspricht, und der an dem Obergurtblech 21 positioniert wird bzw. mit diesem verbindbar ist. Hierzu sind im Auflagebereich 41 Durchführungen 46 vorgesehen, durch die entsprechende Befestigungsmittel führbar sind. Der zum horizontalen Auflagebereich 41 senkrecht anordenbare vertikale Bereich 42 ist dagegen mit dem Tank 1 koppelbar. In dem vertikalen Bereich 42 der oberen Befestigungsplatte 4 können insbesondere zwei Durchführungen 45 zur Aufnahme eines im Weiteren gezeigten Bolzens 44 vorgesehen sein. Mittels des Bolzens 44 ist die Vorrichtung mit dem Tank 1 koppelbar.

Die obere Befestigungsplatte 4 kann aus vier oder weniger miteinander verschweißten Flachmetallelementen mit entsprechenden Durchführungen bzw. Ausnehmungen gefertigt sein.

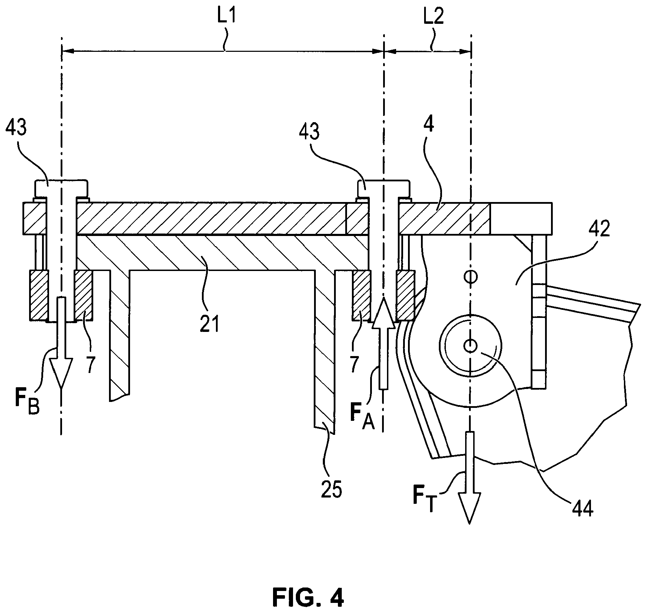

Figur 4 zeigt eine Schnittansicht der oberen Befestigungsplatte 4, in einem an ein Obergurtblech 21 montierten Zustand. Die Befestigungsplatte 4 ist dabei mittels Schrauben 43 an dem Obergurtblech 21 befestigt. Im rechten Bereich der Figur 4 ist ein Befestigungspunkt des Tanks 1 gezeigt. Wie der Figur 4 entnehmbar ist, wird im Bereich der Schrauben 43, die an der dem Tank 1 zugewandten Seite der Befestigungsplatte 4 verbaut sind, ein Großteil der Gewichtskraft F_{T} des Tanks 1 in das Obergurtblech 21 als Kraft F_{A} eingeleitet. An der dem Tank 1 gegenüberliegenden Seite der oberen Befestigungsplatte 4 wird über die dort vorgesehenen Schrauben 43 eine entgegengesetzte Kraft F_{B} in das Obergurtblech 21 eingeleitet.

Die obere Befestigungsplatte 4 kann ferner ein oder mehrere Bolzenlager in ihren vertikalen Bereichen 42 aufweisen und auf speziell geformten Obergurtblechen des Rahmenlängsträgers bzw. des Fahrzeugrahmens 2 aufliegen. Die Form des Obergurtblechs 21 ermöglicht einerseits die einfache Positionierung des Tanks 1 bei der Montage, andererseits ist eine gute Abstützung der oberen Befestigungsplatte 4 aber auch des im Weiteren gezeigten Klemmblocks 7 gewährleistet. Die obere Befestigungsplatte 4 kann mit jeweils zwei Schrauben 43 und einem Klemmbock 7 pro Seite auf dem Obergurtblech 21 befestigt sein, wobei die Schrauben 43 in Ausnehmungen 24 des Obergurtblechs 21 liegen bzw. positioniert sein können. Die gemeinsame Achse der Befestigungsbolzen bzw. Bolzen 44 beider oberen Befestigungsplatten 4 kann parallel zum Längsträgerobergurt 21 bzw. zum Längsträger 23 ausgebildet sein. Dies vereinfacht es baugleiche obere Befestigungsplatten 4 vorne und hinten am Tank 1 bereitzustellen. Auf der gegenüberliegenden Rahmenseite kann das gleiche Teil bzw. Bauteil ebenfalls eingesetzt werden, so dass dort gegebenenfalls ein zweiter Tank 1 mit einer erfindungsgemäßen Vorrichtung montiert werden kann.

Wie in Figur 4 gezeigt, kann die Gewichtskraft des Tanks 1 F_{T} durch die Bolzen 44 in die oberen Befestigungsplatten 4 eingeleitet werden. Bedingt durch diese Anordnung wirken im Bereich der äußeren (in der Figur rechten) Schrauben 43 nur Druckkräfte F_{A} in Richtung nach unten auf das Obergurtblech 21 bzw. entsprechend nach oben wirkende Gegenkräfte auf die oberen Befestigungsplatten 4. Es werden also nur die bezogen auf die Fahrzeuggeometrie inneren Schrauben 43 (in Figur links) durch das Eigengewicht des Tanks belastet, wobei das günstige Hebelverhältnis von beispielsweise L2/L1 eine vorteilhaftere Umwandlung der Last an den inneren (linken) Schrauben 43 in eine Zugkraft F_{B} bewirkt. Vorteilhaft ist ebenfalls, dass die höheren Auflagekräfte außen (rechts) F_{A} als Druckspannungen in den Rahmen bzw. in das Obergurtblech 21 eingeleitet werden. Außerdem befindet sich die Befestigung des Tanks 1 nicht wie in anderen Konstruktionen im Bereich des relativ dünnen (vertikalen) Seitenbleches 25 des Längsträgers 23 sondern im vergleichsweise massiven Obergurtblech 21.

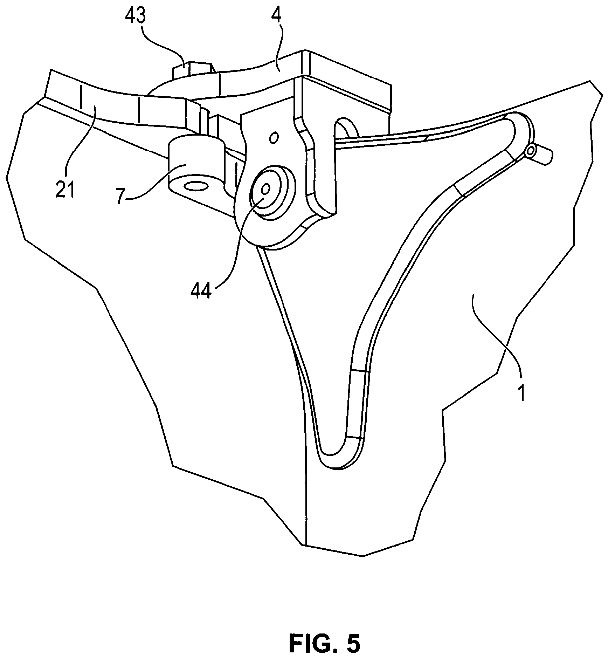

Figur 5 zeigt ein Detail der erfindungsgemäßen Vorrichtung, wobei hier die Kopplung der oberen Befestigungsplatte 4 mittels des Bolzens 44 am Tank 1 hervorgehoben ist. Ferner ist zu erkennen, dass die obere Befestigungsplatte 4 mittels eines Klemmblocks 7 und entsprechender Schrauben 43 mit dem Obergurtblech 21 verbunden sein kann.

Der Bolzen 44 kann sich hierbei in Längsrichtung des entsprechenden Fahrzeugs in etwa so weit erstrecken, wie der Abstand zwischen zwei Schrauben 43 zur Fixierung der oberen Befestigungsplatte 4 groß ist. Schrauben 43 und Bolzen 44 können hierbei im Wesentlichen senkrecht zueinander angeordnet sein.

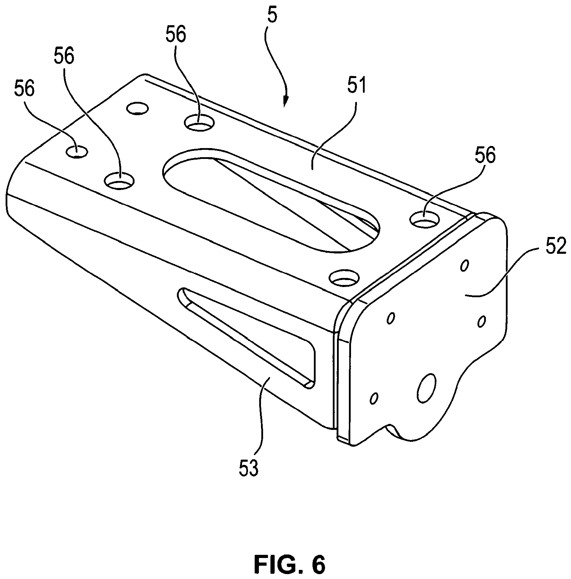

Figur 6 zeigt eine perspektivische Ansicht einer unteren Befestigungsplatte 5, die wie die obere Befestigungsplatte 4 ebenfalls wenigstens teilweise L-förmig ausgebildet sein kann. Die untere Befestigungsplatte 5 kann über einen horizontalen Auflagebereich 51 mit dem Untergurt 22 des Längsträgers 23 verbindbar sein. Hierzu können entsprechende Ausnehmungen bzw. Durchführung 56 an dem horizontalen Auflagebereich 51 vorgesehen sein, durch welche entsprechende Feststellmittel wie beispielsweise Schrauben füllbar sind. Die untere Befestigungsplatte 5 kann ferner einen vertikalen Bereich 52 umfassen, über welchen die untere Befestigungsplatte 5 mit dem Tank 1 koppelbar ist. Der vertikale Bereich 52 kann hierbei als Anschlag ausgebildet sein. Die untere Befestigungsplatte kann zwei zueinander parallel angeordnete Flachmetallabschnitte 53, 54 und zwei zueinander senkrecht angeordnete Flachmetallabschnitte 51, 52 umfassen. Der hintere Flachmetallabschnitt 54 ist zwar in Figur 6 verdeckt, entspricht jedoch dem sichtbaren Flachmetallabschnitt 53 und kann zu diesem symmetrisch sein. Die zueinander parallelen Flachmetallabschnitte 53, 54 können ferner zu beiden zueinander senkrechten Flachmetallabschnitte 51, 52 senkrecht angeordnet sein.

Die zueinander parallelen Flachmetallabschnitte 53, 54 und wenigstens einer der anderen Flachmetallabschnitte können dabei einstückig, insbesondere aus um 90° zueinander gebogenen Segmenten eines Flachmetalls ausgebildet sein. Es ist auch denkbar, dass sowohl die unteren Befestigungsplatten 5 als auch die oberen Befestigungsplatten 4 einstückig aus entsprechend ausgebrannten, gebogenen und verschweißten Flachmetallen gefertigt sind.

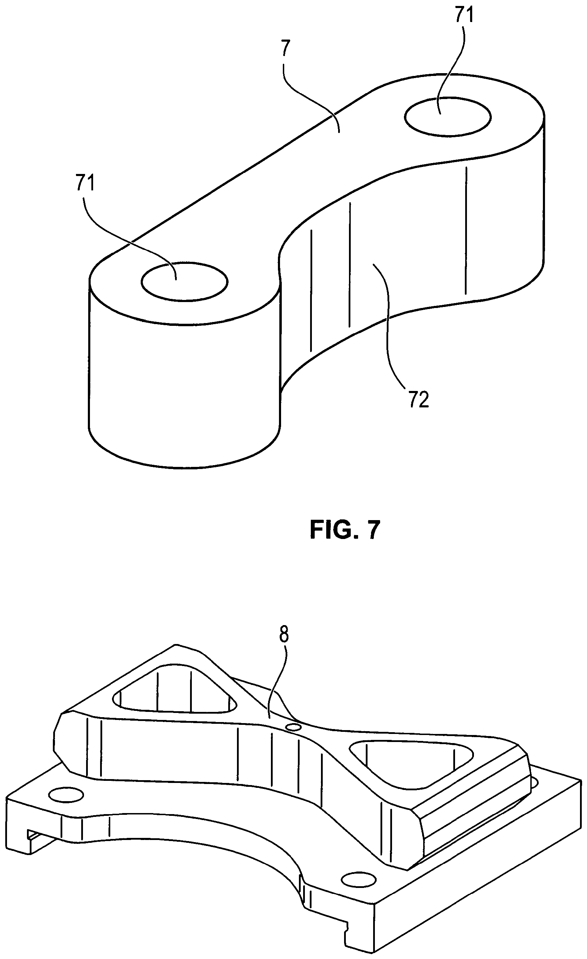

Figur 7 zeigt einen Klemmblock 7, der zum Fixieren der Befestigungsplatten 4, 5 an den Gurtblechen 21, 22 dient. Der Klemmblock 7 kann hierzu zwei Durchführungen 71 aufweisen, die zum Aufnehmen der Schrauben 43 ausgebildet sind. Ferner kann eine Aussparung 72 am Klemmblock 7 vorgesehen sein, die es vereinfacht, den Klemmblock so zu positionieren, dass er nicht mit dem Tank 1 kollidiert. Insbesondere kann auch der vertikale Bereich 42 der oberen Befestigungsplatte 4 in einem montierten Zustand der Vorrichtung wenigstens teilweise in der Aussparung 72 angeordnet sein.

Figur 8 zeigt eine Muldenführung 8, welche auf dem Gurtblech 21, 22 befestigt werden kann. Neben der beschriebenen Befestigung von Tanks 1 können erfindungsgemäß auch andere Bauteile auf die genannte Art an einem Fahrzeugrahmen 2 befestigt werden. Dies betrifft nicht nur einfach Konsolen oder Schaltschränke sondern es können beispielsweise auch zur Durchführung von Wartungsarbeiten Geländer oder Podeste einfach an dem Fahrzeugrahmen 2 befestigt werden, wofür beispielsweise in den Gurtblechen 21, 22 weiteren Ausnehmungen 24 vorgesehen sein können. Exemplarisch zeigt die Figur 8 eine Muldenführung, die auf dem oberen Gurtblech befestigt wird. Die gezeigten Muldenführung 8 fixiert eine abgesenkte Kippmulde mit einem Gegenstück am Fahrwerksrahmen bzw. Fahrzeugrahmen 2 und sorgt in der Transportstellung für eine optimale Positionierung und Krafteinleitung von der Kippmulde in den Fahrzeugrahmen 2. Wird die Muldenführung 8 verschlissen, so kann sie besonders einfach und insbesondere ohne Durchführung von Schweiß- bzw. Brennarbeiten ausgewechselt werden.

## Patentansprüche

1. Vorrichtung zur kraft- und/oder formschlüssigen Befestigung eines Tanks (1) an einem Fahrzeugrahmen (2), mit wenigstens einer an einem oberen Bereich des Tanks (1) koppelbaren oberen Befestigungsplatte (4) und wenigstens einer darunter mit dem Tank (1) koppelbaren unteren Befestigungsplatte (5), wobei die Befestigungsplatten (4, 5) dazu ausgebildet sind, die Gewichtskraft des Tanks (1) großteils oder ausschließlich in ein Obergurtblech (21) und/oder ein Untergurtblech (22) eines Längsträgers (23) des Fahrzeugrahmens (2) zu leiten,
**dadurch gekennzeichnet,**
**dass** die obere Befestigungsplatte (4) und die untere Befestigungsplatte (5) wenigstens teilweise L-förmig ausgebildet sind, wobei die untere Befestigungsplatte (5) über einen unteren horizontalen Auflagebereich (51) mit dem Untergurtblech (22) verschraubbar und über einen unteren vertikalen Bereich (52) mit dem Tank (1) koppelbar ist und wobei die obere Befestigungsplatte (4) über einen oberen horizontalen Auflagebereich (41) mit dem Obergurtblech (21) verschraubbar und über einen oberen vertikalen Bereich (42) mit dem Tank (1) koppelbar ist, wobei der vertikale Bereich (42) der oberen Befestigungsplatte (4) zwei Durchführungen (45) zur Aufnahmen eines Bolzens (44) aufweist, um den Tank (1) mittels des Bolzens (44) mit der Vorrichtung zu koppeln.

2. Vorrichtung nach Anspruch 1, **dadurch gekennzeichnet, dass** die obere Befestigungsplatte (4) und/oder die untere Befestigungsplatte (5) je zwei zueinander vorzugsweise parallel angeordnete Flachmetallabschnitte und je zwei zueinander insbesondere senkrecht angeordnete Flachmetallabschnitte umfassen.

3. Vorrichtung nach einem der vorhergehenden Ansprüche, **dadurch gekennzeichnet, dass** zwischen der unteren Befestigungsplatte (5) und dem Tank (1) mindestens ein Lager (6), insbesondere ein Gummilager (6) vorgesehen ist.

4. Vorrichtung nach einem der vorhergehenden Ansprüche, **dadurch gekennzeichnet, dass** wenigstens zwei zueinander baugleiche obere Befestigungsplatten (4) und/oder dass wenigstens zwei zueinander baugleiche untere Befestigungsplatten (5) vorgesehen sind.

5. Vorrichtung nach einem der vorhergehenden Ansprüche, **dadurch gekennzeichnet, dass** die obere und/oder die untere Befestigungsplatte (4, 5) mit insbesondere baugleichen Klemmblöcken (7) mit dem Fahrzeugrahmen (2) koppelbar sind.

6. Fahrzeug, insbesondere ein Bergbaufahrzeug, wobei der Tank (1) des Fahrzeugs mittels einer Vorrichtung nach einem der Ansprüche 1 bis 5 mit dem Fahrzeugrahmen (2) des Fahrzeugs gekoppelt ist.

## Claims

1. An apparatus for the shape-matching and/or force-fitting fastening of a tank (1) to a vehicle frame (2) having at least one upper fastening plate (4) couplable to an upper region of the tank (1) and having at least one lower fastening plate (5) thereunder couplable to the tank (1), wherein the fastening plates (4, 5) are configured to largely or exclusively conduct the weight force of the tank (1) into a metal top boom plate (21) and/or into a metal bottom boom plate (22) of a longitudinal beam (23) of the vehicle frame (2),
**characterized in that**
the upper fastening plate (4) and/or the lower fastening plate (5) are configured in at least a partially L shape, with the lower fastening plate (5) being screwable to the metal bottom boom plate (22) via a lower horizontal support region (51), and being couplable to the tank (1) via a lower vertical region (52), and with the upper fastening plate (4) being screwable to the metal top boom plate (21) via an upper horizontal support region (41) and being couplable to the tank (1) via an upper vertical region (42), with the vertical region (42) of the upper fastening plate (4) having two passages (45) for receiving a pin (44) to couple the tank (1) to the apparatus by means of the pin (44).

2. An apparatus in accordance with claim 1, **characterized in that** the upper fastening plate (4) and/or the lower fastening plate (5) each comprise two flat metal sections preferably arranged in parallel with one another, and each comprise two flat metal sections in particular arranged perpendicular to one another.

3. An apparatus in accordance with one of the preceding claims, **characterized in that** at least one bearing (6). in particular a rubber bearing (6), is provided between the lower fastening plate (5) and the tank (1).

4. An apparatus in accordance with one of the preceding claims, **characterized in that** at least two upper fastening plates (4) of the same design as one another are provided; and/or **in that** at least two lower fastening plates (5) of the same design as one another are provided.

5. An apparatus in accordance with one of the preceding claims, **characterized in that** the upper and/or lower fastening plates (4, 5) are in particular couplable by clamping blocks (7), in particular of the same design, to the vehicle frame (2).

6. A vehicle, in particular a mining vehicle, wherein the tank (1) of the vehicle is coupled to the vehicle frame (2) of the vehicle by means of an apparatus in accordance with one of the claims 1 to 5.

## Revendications

1. Dispositif de fixation à force et/ou par coopération de formes d'un réservoir (1) sur un châssis de véhicule (2), comprenant au moins une plaque de fixation (4) supérieure, apte à être couplée à une zone supérieure du réservoir (1), et au moins une plaque de fixation (5) inférieure en dessous de celle-ci, apte à être couplée au réservoir (1), les plaques de fixation (4, 5) étant conçues pour transmettre le poids du réservoir (1) en grande partie ou exclusivement dans une tôle de semelle supérieure (21) et/ou une tôle de semelle inférieure (22) d'un longeron (23) du châssis de véhicule (2),
**caractérisé en ce que**
la plaque de fixation (4) supérieure et la plaque de fixation (5) inférieure sont réalisées au moins en partie en forme de L, la plaque de fixation (5) inférieure pouvant être vissée à la tôle de semelle inférieure (22) par le biais d'une zone d'appui (51) inférieure horizontale et être couplée au réservoir (1) par le biais d'une zone verticale (52) inférieure et la plaque de fixation (4) supérieure pouvant être vissée à la tôle de semelle supérieure (21) par le biais d'une zone d'appui (41) supérieure horizontale et couplée au réservoir (1) par le biais d'une zone verticale (42) supérieure, la zone verticale (42) de la plaque de fixation (4) supérieure comportant deux passages (45) pour recevoir un boulon (44), afin de coupler le réservoir (1) au dispositif au moyen du boulon (44).

2. Dispositif selon la revendication 1, **caractérisé en ce que** la plaque de fixation (4) supérieure et/ou la plaque de fixation (5) inférieure comprennent chacune deux parties en métal plat disposées de préférence parallèlement l'une par rapport à l'autre et chacune deux parties en métal plat disposées en particulier perpendiculairement l'une par rapport à l'autre.

3. Dispositif selon l'une des revendications précédentes, **caractérisé en ce qu'**au moins un support (6), en particulier un support en caoutchouc (6), est prévu entre la plaque de fixation (5) inférieure et le réservoir (1).

4. Dispositif selon l'une des revendications précédentes, **caractérisé en ce qu'**au moins deux plaques de fixation (4) supérieures de construction identique et/ou **en ce qu'**au moins deux plaques de fixation (5) inférieures de construction identique sont prévues.

5. Dispositif selon l'une des revendications précédentes, **caractérisé en ce que** la plaque de fixation (4, 5) supérieure et/ou inférieure peuvent être couplées au châssis de véhicule (2) avec des blocs de serrage (7) en particulier de construction identique.

6. Véhicule, en particulier véhicule minier, dans lequel le réservoir (1) du véhicule est couplé au châssis de véhicule (2) du véhicule au moyen d'un dispositif selon l'une des revendications 1 à 5.
